(19) Europäisches Patentamt
European Patent Office
Office européen des brevets

(11) **EP 1 965 280 A1**

(12) **EUROPEAN PATENT APPLICATION**

(43) Date of publication:
**03.09.2008 Bulletin 2008/36**

(51) Int Cl.:
***G05B 13/04*** *(2006.01)*

(21) Application number: **07103422.7**

(22) Date of filing: **02.03.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Scania CV AB**
**151 87 Södertälje (SE)**

(72) Inventor: **Nyberg, Mattias**
**146 49 Tullinge (SE)**

(74) Representative: **Wihlsson, Joakim Per Magnus**
**Bjerkéns Patentbyra KB,**
**Östermalmsgatan 58**
**114 50 Stockholm (SE)**

(54) **Embedded real-time system**

(57) The invention relates to an embedded system (100) for controlling, monitoring or diagnosing an advanced technical system, or entity, such as an internal combustion engine. The embedded system (100) includes a processing unit (110) adapted to implement a discrete realization of a time-continuous description of the entity in real time. The processing unit (110), in turn, has a system module (111) and an integrator module (112). The system module (111) is adapted to receive a state vector ($x(t)$) reflecting a historic internal state of the entity, receive a system module input ($\upsilon(t)$) describing an external signal pertaining to the entity, and based thereon compute a modeled value ($f(x,\upsilon)$). The integrator module (112) is adapted to receive the modeled value ($f(x,\upsilon)$), receive the state vector ($x(t)$), and according to one embodiment of the invention, receive the system module input ($\upsilon(t)$). Based thereon, the integrator module (112) is adapted to compute an updated state vector ($x(t+h)$) reflecting a future internal state of the entity by means of a procedure that involves multiplying the state vector ($x(t)$), the modeled value ($f(x,\upsilon)$) and/or the system module input ($\upsilon(t)$) with at least one nonidentity matrix ($A_1$, $B_1$, $C_1$) including at least one value outside a diagonal of the matrix.

**Fig. 1**

**Description**

THE BACKGROUND OF THE INVENTION AND PRIOR ART

The present invention relates generally to embedded systems. More particularly the invention relates to an embedded real-time system according to the preamble of claim 1 and a motor vehicle according to claim 6. The invention also relates to a method of implementing in real-time a discrete realization of a time-continuous description of an entity according to the preamble of claim 8 and a computer program product according to claim 13.

When controlling, monitoring or diagnosing an advanced technical system it is often useful to have access to a model of the system, which is as accurate and updated as possible. Traditionally, an Euler method (of forward type) has been used to accomplish this kind of real-time simulation. However, a Runge-Kutta approach may also be applied. Nevertheless, for high-frequency processes such fixed-step descriptions require short step lengths (i.e. relatively frequent re-computations of the model output) to be accurate. Naturally, this can be a very processing intensive task, especially if the modeled system is complex. Therefore, an embedded real-time implementation may be impossible, or at least disadvantageous from a cost and/or energy-consumption point-of-view.

The article Rabbath, C. A., et al., "Effective Modeling and Simulation of Internal Combustion Engine Control Systems", Proceedings of the American Control Conference, Arlington, VA, June 25-27, 2001 describes an integrated software-hardware solution to effectively model and simulate internal combustion engine control systems. The solution is based on a modeling and simulation approach, which uses relatively small fixed simulation steps, and is thus comparatively processing intensive. Therefore, it is proposed that the simulation be distributed over multiple processors. Nevertheless, in an embedded system having limited processing and energy resources, this is an unattractive strategy.

SUMMARY OF THE INVENTION

The object of the present invention is therefore to solve the above problems and thus present an embedded real-time solution, which strikes a good balance between modeling accuracy and processing intensity.

According to one aspect of the invention, the object is achieved by the initially described embedded system, wherein the integrator module is adapted to compute the updated state vector based on a multiplication of the state vector and/or the modeled value with at least one nonidentity matrix including at least one value outside a diagonal of the matrix.

This embedded system is advantageous because said matrices can be selected such that high accuracy is attained also for relatively large step lengths (i.e. intervals between the historic internal state and the updated internal state subsequent thereto). At the same time, the required processing intensity is essentially equal to that of a corresponding Euler-based implementation of the same step length.

According to one embodiment of this aspect of the invention, the integrator module is adapted to receive the system module input and compute the updated state vector on the further basis of the system module input. For example, this computation may involve a multiplication of the system module input with a nonidentity matrix including at least one value outside a diagonal of the matrix. Thereby, a higher-precision modeling is attainable.

According to another embodiment of this aspect of the invention, the integrator module is adapted to compute the future internal state based on at least one non-linear term derived from the state vector, the modeled value and/or the system module input. Hence, complex configurations and behaviors can be modeled in a manner being highly computationally efficient.

According to another embodiment of this aspect of the invention, the processing unit further includes a measurement module adapted to receive the state vector, and based thereon, compute an output signal describing an estimated resulting signal produced by the entity. As a result, efficient control, monitoring and/or diagnosing of the entity is facilitated.

According to another aspect of the invention, the object is achieved by a motor vehicle including a controller adapted to control the operation of at least one entity of the vehicle. The controller, in turn, is included in the proposed embedded system.

According to another aspect of the invention, the object is achieved by the method described initially, wherein the computation of the future internal state involves multiplying the state vector and/or the modeled value with at least one nonidentity matrix including at least one value outside a diagonal of the matrix.

The advantages of this method, as well as the preferred embodiments thereof, are apparent from the discussion hereinabove with reference to the proposed embedded real-time system.

According to a further aspect of the invention the object is achieved by a computer program product loadable into a memory of a computer. The program product includes software adapted to control the above proposed method when the program product is run on a computer.

BRIEF DESCRIPTION OF THE DRAWINGS

The present invention is now to be explained more closely by means of embodiments, which are disclosed as examples, and with reference to the attached drawings.

Figure 1 shows a block diagram over an embedded system according to one embodiment of the invention,

Figure 2 illustrates a first embodiment of an integrator module in a processing unit of the proposed embedded system,

Figure 3 illustrates a second embodiment of the integrator module,

Figure 4 shows a block diagram over an internal combustion engine and its associated air flow system being modeled by the proposed embedded real-time system,

Figure 5 shows a diagram illustrating a reference signal and a corresponding signal derived by means of a prior-art Euler forward method,

Figures 6a, b show diagrams illustrating the reference signal of Figure 5 and corresponding signals derived by means of the proposed embedded real-time system,

Figure 7 shows a motor vehicle having an embedded real-time system adapted to control an entity of the vehicle, and

Figure 8 shows a flow diagram illustrating the general method according to the invention.

DESCRIPTION OF EMBODIMENTS OF THE INVENTION

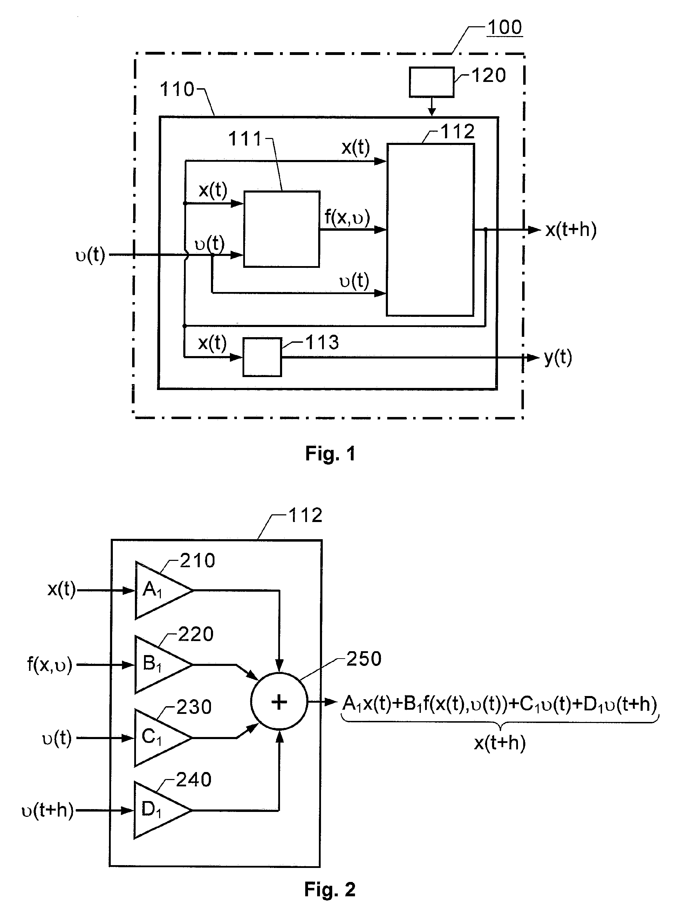

We refer initially to Figure 1, which shows a block diagram over an embedded real-time system 100 according to one embodiment of the invention. The system 100 includes a processing unit 110. According to embodiments of the invention, a measurement module 113 and/or a computer readable medium 120 is also included in the system 100. The computer readable medium 120 (e.g. represented by a memory module) has a program product recorded thereon, where the program product is adapted to make the processing unit 110 control the procedure described below.

The processing unit 110 is adapted to implement a discrete realization of a time-continuous description of an entity, such as an internal combustion engine. To this aim, the unit 110 includes a system module 111 and an integrator module 112.

The system module 111 is adapted to receive a state vector $x(t)$ reflecting a historic internal state of the entity. The system module 111 is also adapted to receive a system module input $\upsilon(t)$ describing an external signal pertaining to the entity. For example, if the modeled entity is an internal combustion engine, the state vector $x(t)$ may describe a temperature in one or more engine locations, various fluid flows, pressures or turbo-related quantities. In any case, based on the state vector $x(t)$ and the system module input $\upsilon(t)$, the system module 111 is adapted to compute a modeled value $f(x,\upsilon)$ which in a time-continuous description of the entity corresponds to the time derivative of the state vector $x(t)$, i.e. $dx/dt$.

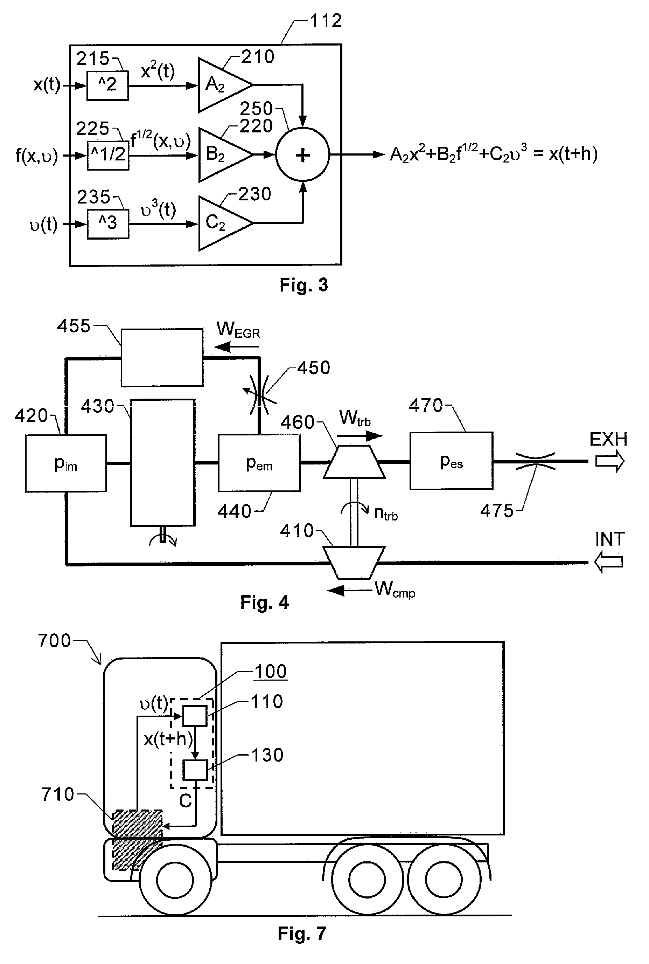

The integrator module 112, in turn, is adapted to receive the modeled value $f(x,\upsilon)$, receive the state vector $x(t)$, receive the system module input $\upsilon(t)$ and based thereon compute an updated state vector $x(t+h)$ reflecting a future internal state of the entity. The updated state vector $x(t+h)$ represents an internal state subsequent to the internal state represented by the state vector $x(t)$, where the vectors $x(t)$ and $x(t+h)$ are separated in time by a step $h$. For most vehicular applications (i.e. wherein the entity is a component included in a motor vehicle), the step $h$ may be selected in the order of 10 ms to 20 ms, say 15 ms, to attain a desirable balance between accuracy and computational intensity. Specifically, the integrator module 112 is adapted to compute the updated state vector $x(t+h)$ by means of a process that involves multiplying the state vector $x(t)$, the modeled value $f(x,\upsilon)$ and/or the system module input $\upsilon(t)$ with at least one nonidentity matrix including at least one value outside a diagonal of the matrix. This procedure will be elucidated below with reference to Figures 2 and 3.

According to one embodiment of the invention, the embedded real-time system 100 includes a measurement module 113. The measurement module 113 is adapted to receive the state vector $x(t)$, and based thereon compute an output signal $y(t)$, which describes an estimated resulting signal produced by the entity. The output signal $y(t)$ can be used for various control purposes, e.g. in respect of the entity itself.

Figure 2 illustrates a first embodiment of the integrator module 112. Here, the updated state vector $x(t+h)$ is formed based on a linear combination of the historic internal state $x(t)$, the modeled value $f(x,\upsilon)$ and the system module input $\upsilon(t)$. However, for illustrating purposes, a current value $\upsilon(t+h)$ of the system module input also forms a basis for the updated state vector $x(t+h)$. Namely, this value $\upsilon(t+h)$ is readily available upon computation of the updated state vector $x(t+h)$, and may therefore likewise be included. To accomplish the combination of vectors, the integrator module 112 includes a first amplification unit 210, a second amplification unit 220, a third amplification unit 210, a fourth amplification unit 240 and a summation unit 250.

The first amplification unit 210 is adapted to receive the state vector $x(t)$ and multiply this vector with a matrix $A_1$ being adapted to the number of elements in the vector $x(t)$, and thus produce a first resulting vector $A_1x(t)$. Analogously, the second, third and fourth amplification units 220, 230 and 240 are adapted to receive the modeled value $f(x,\upsilon)$, the system module input $\upsilon(t)$ and the current value $\upsilon(t+h)$ of the system module input respectively, and to multiply these with a respective matrix $B_1$, $C_1$ and $D_1$ to produce second, third and fourth resulting vectors $B_1f(x(t),\upsilon(t))$, $C_1\upsilon(t)$ and $D_1\upsilon(t+h)$. Of course, depending on the number of elements in the vector $x(t)$, the system module input $\upsilon(t)$, its current value $\upsilon(t+h)$ and the modeled value $f(x,\upsilon)$, one, two or three of the matrices $A_1$, $B_1$, $C_1$ and $D_1$ may be trivial (i.e. be represented by a scalar). According to the invention, however, at least one of the matrices $A_1$, $B_1$, $C_1$ and $D_1$ is a nonidentity matrix including at least one value outside a diagonal of the matrix.

The summation unit 250 is adapted to receive the first, second, third and fourth resulting vectors $A_1x(t)$, $B_1f(x(t),\upsilon(t))$, $C_1\upsilon(t)$ and $D_1\upsilon(t+h)$, and produce the updated state vector $x(t+h)$ as the sum thereof, i.e. $x(t+h) = A_1x(t) + B_1f(x(t),\upsilon(t)) + C_1\upsilon(t) + D_1\upsilon(t+h)$.

To illustrate the fact that the updated state vector $x(t+h)$ equally well may be based on a non-linear combination of the state vector $x(t)$, the modeled value $f(x,\upsilon)$ and the system module input $\upsilon(t)$, we now refer to Figure 3 that shows a second embodiment of the integrator module 112. Here, the units and signals that are associated with reference symbols, which also occur in Figure 2 are identical to the above-described units and signals bearing these reference symbols. As can be seen in Figure 3, a first non-linear unit 215, a second non-linear unit 225 and a third non-linear unit 235 are also included in the input lines adapted to receive the state vector $x(t)$, the modeled value $f(x,\upsilon)$ and the system module input $\upsilon(t)$ respectively.

In the embodiment shown in Figure 3, the first non-linear unit 215 is adapted to apply a non-linear function to the vector $x(t)$ in the form of a squaring operation. Thus, the first non-linear unit 215 receives the state vector $x(t)$ and produces a resulting squared version thereof $x^2(t)$. The second non-linear unit 225 is adapted to apply a non-linear function in the form of a square-root operation. Thus, the second non-linear unit 225 receives the modeled value $f(x,\upsilon)$ and produces a resulting square-rooted version thereof $f^{1/2}(x,\upsilon)$. The third non-linear unit 235 is adapted to apply a non-linear function in the form of a cubic operation. Thus, the third non-linear unit 235 receives the system module input $\upsilon(t)$ and produces a resulting cubic version thereof $\upsilon^3(t)$. Analogous to the first embodiment of the invention described above with reference to Figure 2, the summation unit 250 is adapted to receive vectors $A_2x^2$, $B_2f^{1/2}$ and $C_2\upsilon^3$ resulting from the outputs of the first, second and third amplification units 210, 220 and 230 respectively. Consequently, the summation unit 250 produces the updated state vector $x(t+h)$ as $A_2x^2 + B_2f^{1/2} + C_2\upsilon^3$. Also here at least one of the matrices $A_2$, $B_2$ and $C_2$ is a nonidentity matrix, which includes at least one value outside a diagonal of the matrix.

It is important to note that the linear and non-linear examples shown in Figures 2 and 3 merely represent examples intended to illustrate the proposed principle for forming the updated state vector $x(t+h)$. Preferably, however, the updated state vector $x(t+h)$ is based on both the state vector $x(t)$ and the modeled value $f(x(t),\upsilon(t))$. However, as will be discussed below with reference to Figure 4, the system module input $\upsilon(t)$ need not be an input to the integrator module 112. In an actual implementation *any* linear and non-linear combination is conceivable, and the matrices $A_2$, $B_2$ and $C_2$ as well as any non-linear units 215, 225 and/or 235 are selected for a best possible model fit. Naturally, the number of elements used to produce the updated state vector $x(t+h)$ may also be varied in order to accomplish said model fit. Especially, the number of non-linear elements may be relatively large, including various cross elements, e.g. of the format $Dx^2f^{1/2}$.

In most cases, however, it is not a trivial task to determine the specific combination of matrices $A_1/A_2$, $B_1/B_2$, $C_1/C_2$ and $D_1$ and non-linear units 215, 225 and/or 235 that provide an optimal model fit. To render this potentially complex and tedious undertaking efficient it is proposed that a reference model of the entity be derived offline. Preferably, the reference model is based on a variable step-size method to attain desired precision requirements. This is normally unproblematic because the reference model need not deliver its output in real time. Moreover, relatively large processing resources can be allocated, since the reference model is analyzed *offline* and is not implemented in an embedded system. Hence, it can safely be assumed that the reference model can be designed to approximate a time-continuous description of the entity sufficiently well irrespective of the precision requirements.

When the reference model has been obtained, an adaptive version of the processing unit 110 (i.e. a provisional unit wherein the properties of the matrices $A_1/A_2$, $B_1/B_2$, $C_1/C_2$ and $D_1$ and the non-linear units 215, 225 and 235 can be adjusted) is tuned against this model. This essentially means that the reference model and the processing unit 110 are run in parallel, and their respective outputs are compared with one another. Specifically, a difference (or error) between the two model outputs is determined repeatedly, and the characteristics of the processing unit 110 are adjusted aiming to minimize this error according to a selected measure. For example, a least-square approach may be applied in the tuning process as illustrated by the below example.

Assume that we have a time-continuous description of the entity of the form:

$$dx_r(t)/dt = f(x_r(t), \upsilon(t))$$

(i.e. the reference model), and a corresponding discrete realization of the form:

$$x(t+h) = Ax(t) + Bf(x(t), \upsilon(t)) + C\upsilon(t) + D\upsilon(t+h),$$

which alternatively can be expressed as:

$$x(t_{i+1}) = Ax(t_i) + Bf(x(t_i), \upsilon(t_i)) + C\upsilon(t_i) + D\upsilon(t_{i+1})$$

Hence, the sum-squared error between the reference model and the discrete realization becomes:

$$E = \sum_i (x(t_{i+1}) - x_r(t_{i+1}))^2 =$$

$$= \sum_i (Ax(t_i) + Bf(x(t_i), \upsilon(t_i)) + C\upsilon(t_i) + D\upsilon(t_{i+1}) - x_r(t_{i+1}))^2.$$

The particular tuning of the processing unit 110, which is found to minimize the error according to the selected measure provides the matrices $A_1/A_2$, $B_1/B_2$, $C_1/C_2$ and $D_1$. Nevertheless, if it is decided that non-linear units are to be included into the solution, a very large number of such units may be required to guarantee an overall tuning of the unit 110, which provides a minimal error to the reference model. Namely, theoretically, an infinite number of non-linear terms can be defined. Of course, the number of terms must be kept reasonable because otherwise the online computation in the integrator module 112 will become too heavy to be implemented in real time. Therefore, in practice, the tuning of the processing unit 110 preferably both involves optimizing the number of terms included in the minimization of the above-mentioned sum-squared error. So-called genetic algorithms may be used to find a set of non-linear terms satisfying these two requirements. See for example Whitley, D., "An Overview of Evolutionary Algorithms: Practical Issues and Common Pitfalls", Journal of Information and Software Technology, 43:817-831, 2001.

Generally, it is advantageous if the processing unit 110 makes good usage of the modeled value $f(x, \upsilon)$, e.g. by reusing historic values $f(x(t-h), \upsilon(t-h))$ etc., since computing the modeled value $f(x, \upsilon)$ is often a comparatively processing intensive task. However, storing this value and including the value in later linear, or non-linear operations, is straightforward.

In order to elucidate the proposed model and the efficiency thereof, we now refer to Figure 4 showing a block diagram over an internal combustion engine 430 and an associated air flow system. The engine 430 receives a compressed air flow $W_{cmp}$ from a compressor 410 via an inlet manifold 420. The compressor 410, in turn, is arranged to receive input air INT from an ambient environment outside of a vehicle into which the engine 430 is mounted.

Exhaust gasses from the engine 430 exit via an exhaust manifold 440. A first fraction $W_{EGR}$ of the exhaust gas flow is fed to an exhaust gas recirculation cooler 455. An EGR valve 450 is arranged between the engine 430 and the exhaust gas recirculation cooler 455. The EGR valve 450 is adapted to adjust the magnitude of the first exhaust gas fraction $W_{EGR}$ to a desired value. The exhaust gas recirculation cooler 455 is adapted to cool the first exhaust gas fraction $W_{EGR}$, and arranged to forward the cooled gasses to the inlet manifold 420 for mixing with the compressed air flow $W_{cmp}$. A second fraction $W_{trb}$ of the exhaust gas flow from the engine 430 is fed to a turbine 460, which is mechanically connected to the compressor 410 such that a relatively large second exhaust gas flow fraction $W_{trb}$ causes a comparatively high turbine speed $n_{trb}$, and thus high compression of the input air INT, and vice versa. The second exhaust gas flow fraction $W_{trb}$ is fed to an exhaust gas system 470, and via a restriction means 475 out into the ambient environment.

For illustrating purposes, we define a state vector $x(t)$ to be modeled, where:

$$x(t) = \begin{pmatrix} p_{im}(t) \\ p_{em}(t) \\ n_{trb}(t) \\ p_{es}(t) \end{pmatrix},$$

$p_{im}(t)$ reflects a gas pressure registered at time t in the inlet manifold 420,
$p_{em}(t)$ reflects a gas pressure registered at time t in the exhaust manifold 440,
$n_{trb}(t)$ reflects the turbine speed at time t, and
$p_{es}(t)$ reflects a gas pressure registered at time t in the exhaust gas system 470.

Furthermore, for simplicity, the following computational structure of the model is chosen:

$$x(t+h) = Ax(t) + Bf(x(t),u(t)),$$

i.e. not including a system module input $\upsilon(t)$.

A step h = 10 ms is selected, and the above-described least-square approach is applied. As a result, the constants A and B are determined to:

$$A = 10^{-2} * \begin{pmatrix} 100,0019 & -0,0029 & 0,0292 & 0,0004 \\ 0,0964 & 99,9304 & -0,9747 & 0,0292 \\ 0,0000 & 0,0000 & 99,9993 & 0,0000 \\ -0,0001 & 0,0001 & 0,0007 & 100,0000 \end{pmatrix}$$

and

$$B = 10^{-5} * \begin{pmatrix} 96,7087 & 1,2840 & 45,1890 & 18,2227 \\ 90,8433 & 36,0406 & -469,0396 & -266,5910 \\ -0,0213 & 0,0122 & 99,8757 & 0,2779 \\ -0,0876 & 0,0441 & 1,1204 & 100,1287 \end{pmatrix}$$

respectively.

Clearly, each of these constants is a nonidentity matrix, which includes values outside the diagonal of the matrix.

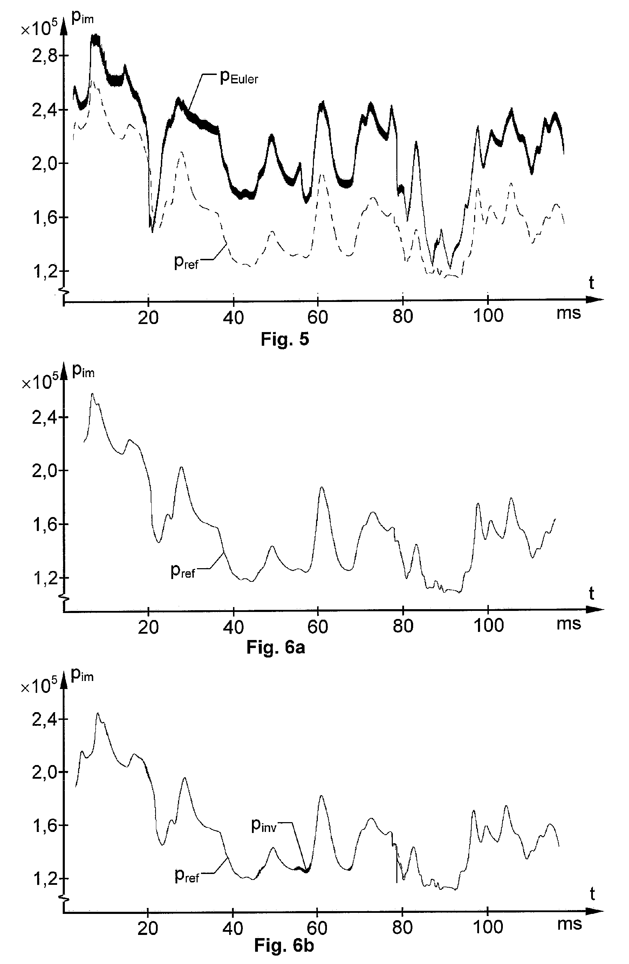

To illustrate the advantages of a real-time implementation of a discrete realization of a time-continuous description of an entity based on a model derived according to the proposed approach, we now refer to Figure 5. Here, a diagram is shown which illustrates a reference signal $p_{ref}$ as a function of time t. The reference signal $p_{ref}$, which here represents the gas pressure $p_{im}$ in the inlet manifold 420, has been obtained offline by means of a high-precision variable step-size integrator. Figure 5 also shows an estimation $p_{Euler}$ of the gas pressure $p_{im}$, which has been derived using a traditional real-time forward Euler method with a step size h = 10 ms, and wherein the constants A and B are diagonal matrices. As can be seen, the estimation $p_{Euler}$ deviates substantially from the reference signal $p_{ref}$. Moreover, the deviation varies substantially over time t.

Figure 6a shows another diagram, which illustrates the reference signal $p_{ref}$ as a function of time t. The diagram in Figure 6a also shows a real-time estimation of the gas pressure $p_{im}$, which has been derived using the proposed model with a step size h = 10 ms, and wherein the constants A and B have the above values. In this case, the deviation between the real-time estimation and the reference signal $p_{ref}$ is actually so insignificant that no deviation can be distinguished in the scale of the diagram.

Therefore, Figure 6b shows a diagram, which illustrates a real-time estimation $p_{inv}$ of the gas pressure $p_{im}$ derived based on the proposed model, however where the step size h = 40 ms. Also here, there is a fair agreement between the real-time estimation $p_{inv}$ and the reference signal $p_{ref}$. Nevertheless, around t = 47 ms, t = 58 ms and t = 78 ms minor deviations can be distinguished. As mentioned earlier, it should be borne in mind though that in vehicular implementations the step size h is preferably selected around 10 to 20 ms, i.e. substantially shorter than 40 ms.

Figure 7 shows a motor vehicle 700 including an embedded real-time system 100 adapted to control an entity 710 of the vehicle 700. In this example, the controlled entity is represented by an internal combustion engine 710, and we assume that the embedded real-time system 100 is adapted to control the engine's 710 turbo speed by means of a control signal C.

A system module input $\upsilon(t)$ is registered, which describes appropriate engine parameters, e.g. engine speed, various temperatures and fluid flows etc. Based on a turbo speed model (implemented by the above-described system module 111 and integrator module 112) and the system module input $\upsilon(t)$, the processing unit 110 of the embedded system 100 repeatedly produces an updated state vector x(t+h) that reflects a future internal state, including an estimated turbo speed. On the further basis of the updated state vector x(t+h), a controller 130 included in the embedded real-time system 100 generates the control signal C, such that the engine 710 is expected to attain a desired turbo speed.

Instead of the above-described design, the proposed embedded real-time system 100 may equally well be adapted to implement a monitoring or diagnosing function in respect of the engine 710, or another component/unit of the vehicle 700.

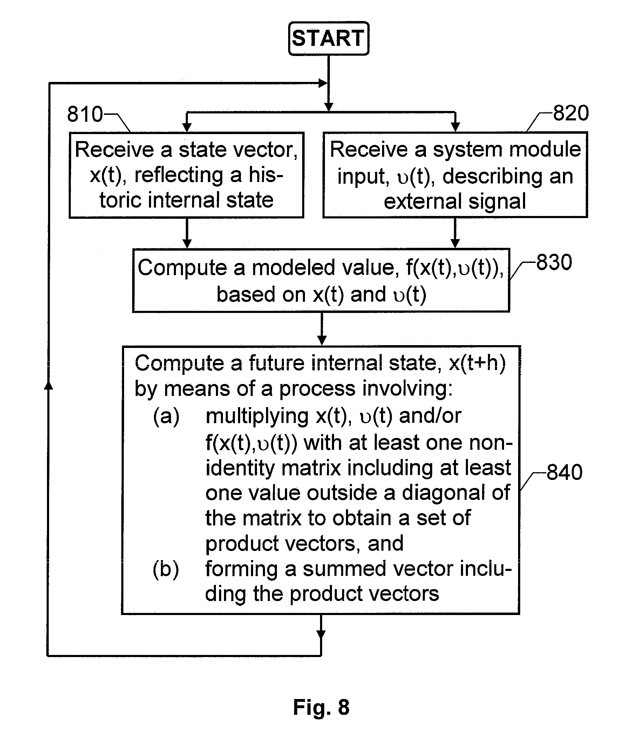

In order to sum up, the general method of implementing in real-time a discrete realization of a time-continuous description of an entity according to the invention will be described below with reference to the flow diagram in figure 8.

A first step 810 receives a state vector x(t) reflecting a historic internal state of the entity. A second step 820, preferably executed in parallel with step 810, receives a system module input $\upsilon(t)$ describing an external signal pertaining to the entity. Subsequently, a step 830 computes a modeled value $f(x(t),\upsilon(t))$ based on the state vector x(t) and the system module input $\upsilon(t)$.

Thereafter, a step 840 computes a future internal state x(t+h) at least based on the modeled value $f(x(t),\upsilon(t))$ and the state vector x(t) This computation involves multiplying the state vector x(t) and the modeled value $f(x(t),\upsilon(t))$ with a respective matrix. As mentioned earlier, the future internal state x(t+h) is based on both the state vector x(t) and the modeled value $f(x(t),\upsilon(t))$, however not necessarily on the system module input $\upsilon(t)$. A summed vector is produced, which includes the resulting product vectors, and possibly one or more additional vectors. According to the invention, at least one of said matrices is a nonidentity matrix including at least one value outside a diagonal of the matrix.

Finally the procedure loops back to steps 810 and 820 for reception of a new a state vector x(t) and a new system module input $\upsilon(t)$ respectively. Preferably, the time elapsed when executing steps 810 through 840 corresponds to a time represented by the above-mentioned step h.

All of the process steps, as well as any sub-sequence of steps, described with reference to the figure 8 above may be controlled by means of at least one programmed computer apparatus. Moreover, although the embodiments of the invention described above with reference to the drawings comprise computer apparatus and processes performed in computer apparatus, the invention thus also extends to computer programs, particularly computer programs on or in a carrier, adapted for putting the invention into practice. The program may be in the form of source code; object code, a code intermediate source and object code such as in partially compiled form, or in any other form suitable for use in the implementation of the process according to the invention. The carrier may be any entity or device capable of carrying the program. For example, the carrier may comprise a storage medium, such as a Flash memory, a ROM (Read Only Memory), for example a CD (Compact Disc) or a semiconductor ROM, an EPROM (Erasable Programmable Read-Only Memory), an EEPROM (Electrically Erasable Programmable Read-Only Memory), or a magnetic recording medium, for example a floppy disc or hard disc. Further, the carrier may be a transmissible carrier such as an electrical or optical signal, which may be conveyed via electrical or optical cable or by radio or by other means. When the program is embodied in a signal, which may be conveyed, directly by a cable or other device or means, the carrier may be constituted by such cable or device or means. Alternatively, the carrier may be an integrated circuit in which the program is embedded, the integrated circuit being adapted for performing, or for use in the performance of, the relevant processes.

The invention is not restricted to the described embodiments in the figures, but may be varied freely within the scope of the claims.

**Claims**

1. An embedded system (100) comprising a processing unit (110) adapted to implement in real-time a discrete realization of a time-continuous description of an entity, the processing unit (110) comprising:

a system module (111) adapted to receive a state vector (x(t)) reflecting a historic internal state of the entity, receive a system module input ($\upsilon$(t)) describing an external signal pertaining to the entity, and based thereon compute a modeled value (f(x,$\upsilon$)), and

an integrator module (112) adapted to receive the modeled value (f(x,$\upsilon$)), receive the state vector (x(t)) and based thereon compute an updated state vector (x(t+h)) reflecting a future internal state of the entity, **characterized in that** the integrator module (112) is adapted to compute the updated state vector (x(t+h)) based on a multiplication of at least one of the state vector (x(t)) and the modeled value (f(x,$\upsilon$)) with at least one nonidentity matrix ($A_1$, $B_1$) including at least one value outside a diagonal of the matrix.

2.  The embedded system (100) according to claim 1, wherein the integrator module (112) is adapted to receive the system module input ($\upsilon$(t)) and compute the updated state vector (x(t+h)) on the further basis of the system module input ($\upsilon$(t)).

3.  The embedded system (100) according to claim 2, wherein the integrator module (112) is adapted to compute the updated state vector (x(t+h)) based on a multiplication of the system module input ($\upsilon$(t)) with a nonidentity matrix ($C_1$) including at least one value outside a diagonal of the matrix.

4.  The embedded system (100) according to any one of the claims 2 or 3, wherein the integrator module (112) is adapted to compute the future internal state (x(t+h)) based on at least one non-linear term ($A_2x^2$, $B_2f^{1/2}$, $C_2\upsilon^3$) derived from at least one of the state vector (x(t)), the modeled value (f(x,$\upsilon$)) and the system module input ($\upsilon$(t)).

5.  The embedded system (100) according to any one of the preceding claims, wherein the processing unit (110) comprises a measurement module (113) adapted to receive the state vector (x(t)), and based thereon, compute an output signal (y(t)) describing an estimated resulting signal produced by the entity.

6.  A motor vehicle (700) comprising an embedded system (100) according to any one of the preceding claims adapted to control the operation of at least one entity (710) of the vehicle (700).

7.  The motor vehicle (700) according to claim 6, wherein at least one of the at least one entity is an engine component (710).

8.  A method of implementing in real-time a discrete realization of a time-continuous description of an entity, the method comprising:

    computing a modeled value (f(x, $\upsilon$)) based on a state vector (x(t)) reflecting a historic internal state of the entity and a system module input ($\upsilon$(t)) describing an external signal pertaining to the entity, and
    computing a future internal state (x(t+h)) of the entity based on the modeled value (f(x,$\upsilon$)) and the state vector (x(t)),

    **characterized by** the computation of the future internal state (x(t+h)) involving multiplying at least one of the state vector (x(t)) and the modeled value (f(x,$\upsilon$)) with at least one nonidentity matrix ($A_1$, $B_1$) including at least one value outside a diagonal of the matrix.

9.  The method system according to claim 8, wherein the computation of the future internal state (x(t+h)) is further based on the system module input ($\upsilon$(t)).

10. The method system according to claim 9, wherein the computation of the future internal state (x(t+h)) involves a multiplication of the system module input ($\upsilon$(t)) with a nonidentity matrix ($C_1$) including at least one value outside a diagonal of the matrix.

11. The method according to any one of the claims 9 or 10, wherein the computation of the future internal state (x(t+h)) involves computing the future internal state (x(t+h)) based on at least one non-linear term ($A_2x^2$, $B_2f^{1/2}$, $C_2\upsilon^3$) derived from at least one of the state vector (x(t)), the modeled value (f(x,$\upsilon$)) and the system module input ($\upsilon$(t)).

12. The method according to any one of the claims 8 to 11, comprising compute an output signal (y(t)) describing an estimated resulting signal produced by the entity based on the state vector (x(t)).

13. A computer program product loadable into a memory of a computer (120), comprising software adapted to control the steps of any of the claims 8 to 12 when the program product is run on the computer.

14. The computer program product according to claim 13, wherein the program product is recorded onto a carrier.

Fig. 1

Fig. 2

**Fig. 3**

$$A_2 x^2 + B_2 f^{1/2} + C_2 \upsilon^3 = x(t+h)$$

**Fig. 4**

**Fig. 7**

**Fig. 5**

**Fig. 6a**

**Fig. 6b**

START

810

Receive a state vector, x(t), reflecting a historic internal state

820

Receive a system module input, υ(t), describing an external signal

830

Compute a modeled value, f(x(t),υ(t)), based on x(t) and υ(t)

840

Compute a future internal state, x(t+h) by means of a process involving:

(a) multiplying x(t), υ(t) and/or f(x(t),υ(t)) with at least one nonidentity matrix including at least one value outside a diagonal of the matrix to obtain a set of product vectors, and

(b) forming a summed vector including the product vectors

**Fig. 8**

European Patent
Office

**EUROPEAN SEARCH REPORT**

**Application Number**

EP 07 10 3422

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/088060 A1 (RENOU STEPHANE [US] ET AL) 6 May 2004 (2004-05-06) * paragraph [0032] - paragraph [0049]; figure 8 * | 1,2,8,9, 13,14 | INV. G05B13/04 |
| X | EP 1 447 727 A (UNITED TECHNOLOGIES CORP [US]) 18 August 2004 (2004-08-18) * paragraph [0008] - paragraph [0075] * | 1,2,8,9, 13,14 | |
| A | GB 2 321 720 A (SECR DEFENCE [GB]) 5 August 1998 (1998-08-05) * the whole document * | 1-14 | |
| A | US 2003/212723 A1 (QUINTERO-DE-LA-GARZA RAUL GERA [MX]) 13 November 2003 (2003-11-13) * the whole document * | 1-14 | |

**TECHNICAL FIELDS SEARCHED (IPC)**

G05B

The present search report has been drawn up for all claims

| Place of search | Date of completion of the search | Examiner |
|---|---|---|
| Munich | 5 October 2007 | Jonda, Sven |

## ANNEX TO THE EUROPEAN SEARCH REPORT
## ON EUROPEAN PATENT APPLICATION NO.

EP 07 10 3422

This annex lists the patent family members relating to the patent documents cited in the above-mentioned European search report.
The members are as contained in the European Patent Office EDP file on
The European Patent Office is in no way liable for these particulars which are merely given for the purpose of information.

05-10-2007

| Patent document cited in search report | | | Publication date | Patent family member(s) | | Publication date |
|---|---|---|---|---|---|---|
| US 2004088060 | A1 | | 06-05-2004 | NONE | | |
| EP 1447727 | A | | 18-08-2004 | JP 2004280792 A | | 07-10-2004 |
| | | | | US 2004162709 A1 | | 19-08-2004 |
| GB 2321720 | A | | 05-08-1998 | EP 0858017 A2 | | 12-08-1998 |
| | | | | US 6063129 A | | 16-05-2000 |
| US 2003212723 | A1 | | 13-11-2003 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **RABBATH, C. A. et al.** Effective Modeling and Simulation of Internal Combustion Engine Control Systems. *Proceedings of the American Control Conference,* June 2001, 25-27

- **WHITLEY, D.** An Overview of Evolutionary Algorithms: Practical Issues and Common Pitfalls. *Journal of Information and Software Technology,* 2001, vol. 43, 817-831